# EUROPEAN PATENT APPLICATION

(11) **EP 2 840 573 A1**
(43) Date of publication of application: **25.02.2015**
(21) Application number: 13306162.2
(22) Date of filing: 21.08.2013
(51) Int. Cl.: G11B 27/34, G06F 17/30

(54) **Method and apparatus for interactive review of multiple Datasets**

(71) Applicant: Thomson Licensing, 92130 Issy-les-Moulineaux (FR)
(72) Inventor: Theis, Oliver, 32689 Kalletal (DE); Brune, Thomas, 30449 Hannover (DE)
(74) Representative: Schmidt-Uhlig, Thomas

(57) **Abstract**

A method for interactive review of two or more datasets and an apparatus (30) configured to enable interactive review of two or more datasets are described. At least a first dataset and a second dataset are retrieved (20) via an input (31). A processor (33) generates (21, 23) representative values from the first dataset for a coarse view (3) of the first dataset and for a fine view (4) of the first dataset. The processor (33) also generates (22) representative values from the second dataset for a coarse view (8) of the second dataset. A user interface generator (34) includes (24) the coarse view (3) of the first dataset, the coarse view (8) of the second dataset, and the fine view (4) of the first dataset in a graphic user interface (1). Upon reception (25) of a user request via a user input 32 to select the second dataset, the processor (33) generates (26) representative values from the second dataset for a fine view (9) of the second dataset. The user interface generator (34) then replaces (27) the fine view (4) of the first dataset in the graphic user interface (1) with the fine view (9) of the second dataset.

## Description

### FIELD OF THE INVENTION

The invention relates to a method and to an apparatus for interactive review of multiple datasets. More specifically, a method and an apparatus are described, which allow a reviewer to easily access and analyze data of two or more large datasets using a graphic user interface.

### BACKGROUND OF THE INVENTION

Digital motion pictures, also referred to as a digital image sequence, often come along with metadata information. Preferably, metadata information is available for every single frame of the digital image sequence. Metadata is typically generated either by the camera itself or, more likely, by a real-time or non-real-time post processing algorithm. Metadata comprises a plurality of information, e.g. the noise level, image contrast or, in case of more sophisticated algorithms, a number of faces or cars or the like detected within the respective frame. However, for a 90 minutes digital movie with typically 24 frames per second a single metadata file comprises 129600 metadata elements. In professional post production environments, a human reviewer working on multiple datasets per movie or even with multiple movies having a plurality of datasets needs to inspect the metadata information for certain quality criteria. Due to the huge amount of information the human reviewer has a vital interest in optimizing the time needed to inspect the metadata.

Common techniques for displaying such large amount of data in a single plot, e.g. in a graph or bar plot, typically use downsampling in order to match the amount of data that is desired to be displayed (e.g. the more than 100000 metadata elements) to the available pixels or dots of a display unit. A display unit within the meaning of the term is e.g. a monitor especially used for display of the metadata, a graphical user interface (typically referred to as a GUI), e.g. a window that is used for that purpose. The available resolution is defined by the monitor itself, i.e. by the hardware resolution of the respective monitor or by a number of pixels inside a GUI-window that is used for display of the metadata.

In this regard EP 2 485 190 discloses a solution for representing a large amount of metadata corresponding to sequences of image frames on a displaying media with finite resolution. In order to ensure that a generated data graph fits the displaying media, the dataset is divided into clusters of a defined length. Each cluster represents a single value of the plot and is processed individually. Processing of the clusters is performed in such way that outliners are maintained. This is well suited for giving a quick overview of the metadata for quality control. However, while this approach ensures that important data samples are visible to the reviewer, how to allow the reviewer to handle such important data samples is not discussed.

To solve this issue European Patent Application EP (tbd) proposes to generate representative values from a dataset for a coarse view of the dataset as well as representative values for a fine view of the dataset. The fine view only contains a subset of the dataset. Both the coarse view of the dataset and the fine view of the dataset are displayed in a graphic user interface. Interactive behavior is achieved in that clicking at a desired part of the coarse view causes an update of the fine view. However, how to handle review of multiple large datasets is not addressed.

### SUMMARY OF THE INVENTION

It is an object of the invention to provide a solution for interactive review of multiple large datasets using a graphic user interface.

According to one aspect of the invention, a method for interactive review of two or more datasets comprises the steps of:
- retrieving at least a first dataset and a second dataset;
- generating representative values from the first dataset for a coarse view of the first dataset;
- generating representative values from the second dataset for a coarse view of the second dataset;
- generating representative values from the first dataset for a fine view of the first dataset;
- including the coarse view of the first dataset, the coarse view of the second dataset, and the fine view of the first dataset in a graphic user interface; and
- responsive to receiving a user request to select the second dataset:
- generating representative values from the second dataset for a fine view of the second dataset; and
- replacing the fine view of the first dataset in the graphic user interface with the fine view of the second dataset.

Accordingly, an apparatus configured to enable interactive review of two or more datasets comprises:
- an input configured to retrieve at least a first dataset and a second dataset;
- a user input configured to receive a user request to select the second dataset;
- a processor configured to generate representative values from the first dataset for a coarse view of the first dataset and for a fine view of the first dataset, and to generate representative values from the second dataset for a coarse view of the second dataset and for a fine view of the second dataset; and
- a user interface generator configured to include the coarse view of the first dataset, the coarse view of the second dataset, and the fine view of the first dataset in a graphic user interface, wherein the user interface generator is further configured to replace the fine view of the first dataset in the graphic user interface with the fine view of the second dataset responsive to receiving a user request to select the second dataset.

Similarly, a computer readable storage medium has stored therein instructions enabling interactive review of two or more datasets, which when executed by a computer, cause the computer to:
- retrieve at least a first dataset and a second dataset;
- generate representative values from the first dataset for a coarse view of the first dataset;
- generate representative values from the second dataset for a coarse view of the second dataset;
- generate representative values from the first dataset for a fine view of the first dataset;
- include the coarse view of the first dataset, the coarse view of the second dataset, and the fine view of the first dataset in a graphic user interface; and
- responsive to receiving a user request to select the second dataset:
- generate representative values from the second dataset for a fine view of the second dataset; and
- replace the fine view of the first dataset in the graphic user interface with the fine view of the second dataset.

The proposed solution solves the problem of interactively reviewing multiple datasets on fine and coarse temporal scale at the same time on a display of limited dimensions. To this end a stack of multiple datasets is used, where only the dataset at the top of the stack is under fine view investigation. Having only one dataset at a time under fine view is a meaningful restriction, since reviewers usually concentrate on one dataset after the other.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

### BRIEF DESCRIPTION OF THE DRAWINGS

- Fig. 1: depicts a graphic user interface suitable for interactive review of a single dataset;
- Fig. 2: shows a graphic user interface suitable for interactive review of two sets of metadata;
- Fig. 3: explains an effect of scrolling in case the graphic user interface does not fit into a display area;
- Fig. 4: shows a first implementation of a graphic user interface in accordance with the present invention;
- Fig. 5: depicts a second implementation of a graphic user interface in accordance with the present invention;
- Figs. 6-9: illustrate a third implementation of a graphic user interface in accordance with the present invention;
- Fig. 10: shows a method according to the invention for interactive review of multiple datasets; and
- Fig. 11: depicts an apparatus implementing the method of Fig. 10.

### DETAILED DESCRIPTION OF A PREFERRED EMBODIMENT

In the following the invention shall be described at the example of interactive review of metadata corresponding to an image sequence comprising frames. It is assumed that metadata varies frame by frame. Of course, use of the invention is not limited to this example. The general approach is likewise applicable to other types of datasets.

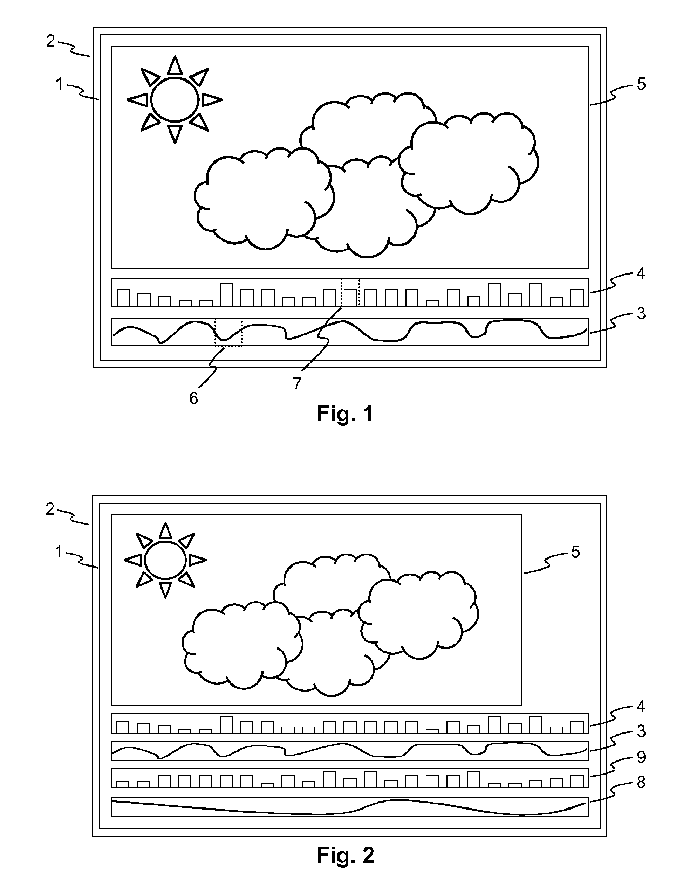

Fig. 1 is a schematic exemplary view of a graphic user interface 1 used for interactive review of a single set of metadata on a display 2. At the bottom of the screen layout, metadata for the complete image sequence is presented in a coarse view 3, where horizontal pixels represent information for multiple frames. The coarse view 3 is preferably generated by determining a value for the maximum number of values that can be displayed in the coarse view 3, generating a corresponding number of data clusters, determining a representative value for each cluster, and displaying only the determined representative values in the coarse view 3. Each cluster comprises a plurality of subsequent metadata elements, which is determined by dividing the total number of metadata elements by number of values that can be displayed. The representative value for each cluster is determined by applying a predetermined function to the metadata elements of the respective cluster, e.g. a max-function or a min-function.

Above the coarse view 3 a fine view 4 representing a section of the set of metadata is shown, favorably with the metadata for each single frame. The section is advantageously highlighted in the coarse view 3 with a section window 6. The size of the section interval is preferably set in a way that metadata for each frame is represented by at least one horizontal pixel. Typically, for convenience a couple of pixels are used together with spacing between the graphical representation of the data. In addition to the displayed metadata, advantageously the content of the current frame associated to the metadata is displayed in a frame window 5. In the fine view 4 the metadata corresponding to the current frame under investigation is shown in the middle of the fine view 4, favorably identified by a marker 7 for easy inspection of the metadata corresponding to the frames before and after. The layout of the graphic user interface 1 in this example is chosen such that the whole available display area of the display 2 is used.

Interactive behavior is achieved by clicking in the coarse view 3 or the fine view 4, e.g. by touching or pointing, and jumping to the corresponding frame. To this end a processing device with a keyboard, a mouse or a touch user interface is used to generate the dynamic display, e.g. a general purpose PC or dedicated hardware. Upon jumping to the target frame, the section window 7 in the coarse view 3, the metadata displayed in the fine view 4 and the content view in the frame window 5 are refreshed.

In a general-purpose graphical user environment application, windows may usually be resized dynamically by the user. When this is the case, the coarse view 3 is reprocessed as described above in order to adjust to the new virtual screen resolution. The fine view section window 4 is then adjusted accordingly, e.g. by changing the range of data that is displayed or by changing the number of pixels that are used for representing a data value of the space between adjacent data values.

In order to review multiple sets of metadata, either simultaneously or one after the other, it is necessary to bring more information to the user with the finite physical dimensions and resolution of a certain display. An example of a graphic user interface 1 used for interactive review of two sets of metadata is illustrated in Fig. 2. In addition to the elements already shown in Fig. 1 this graphic user interface 1 has an additional coarse view 8 and an additional fine view 9 for the second set of metadata. However, due to the limited available display area of the display 2, the size of the coarse views 3, 8, the fine views 4, 9, and the frame window 5 is reduced. While this might still be acceptable for review of two datasets, the situation becomes worse if more datasets need to be reviewed.

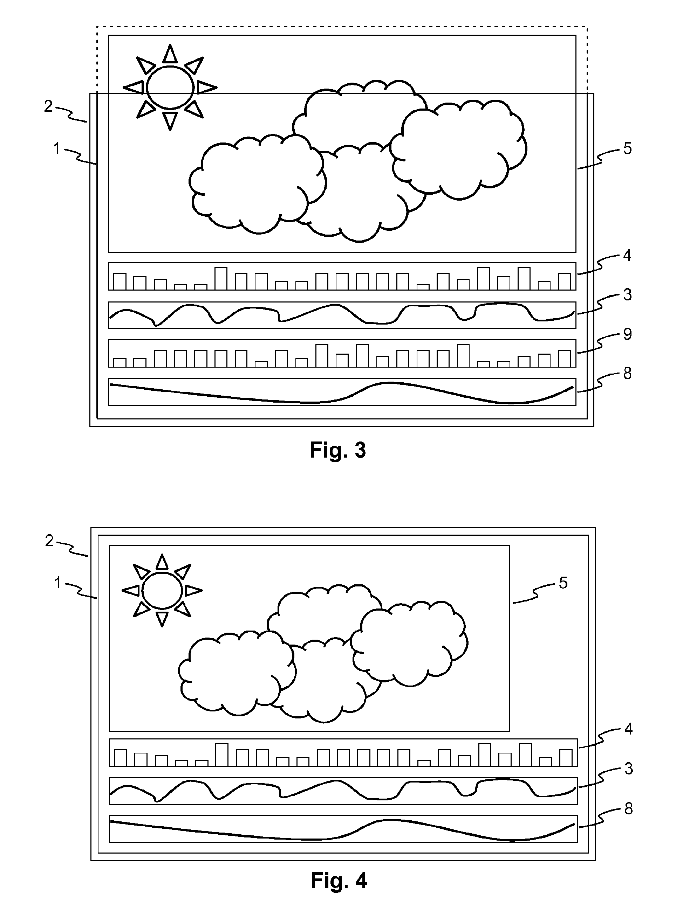

One, maybe the most common, generic approach to this kind of problem is vertical, i.e. top-down, scrolling. This approach is used for many kinds of electronic media documents (Text, PDF, HTML, etc.), whose content does not fit on a single screen. However, scrolling would lead to the problem that the content view in the frame window 5 is scrolled out of the display area, i.e. it is no longer visible or only partly visible. This is schematically illustrated in Fig. 3, where the dashed line indicates that part of the graphic user interface 1 that is not visible on the display 2.

According to the invention, the above drawback is overcome using only a single fine view 4 for multiple coarse views 3, 8. Fig. 4 shows a first implementation of this approach. A single fine view 4 is arranged above two coarse views 3, 8. In the figure the fine view 4 shows the values corresponding to the coarse view 3 of the first set of metadata. When the user selects the second set of metadata, e.g. by clicking on the coarse view 8 of the second set of metadata, the fine view 4 is updated with the values corresponding to the coarse view 8 of the second set of metadata. In other words, only one set of metadata, or one coarse view, 3, 8, is 'active' and thus displayed in the fine view 4. Which set of metadata is actually active is preferably indicated by highlighting the corresponding coarse view 3, 8 or by adding explanatory text to the fine view 4. Though in Fig. 4 the size of the content view in the frame window 5 is still reduced, at least the size of the coarse views 3, 8 and the fine view 4 can be maintained.

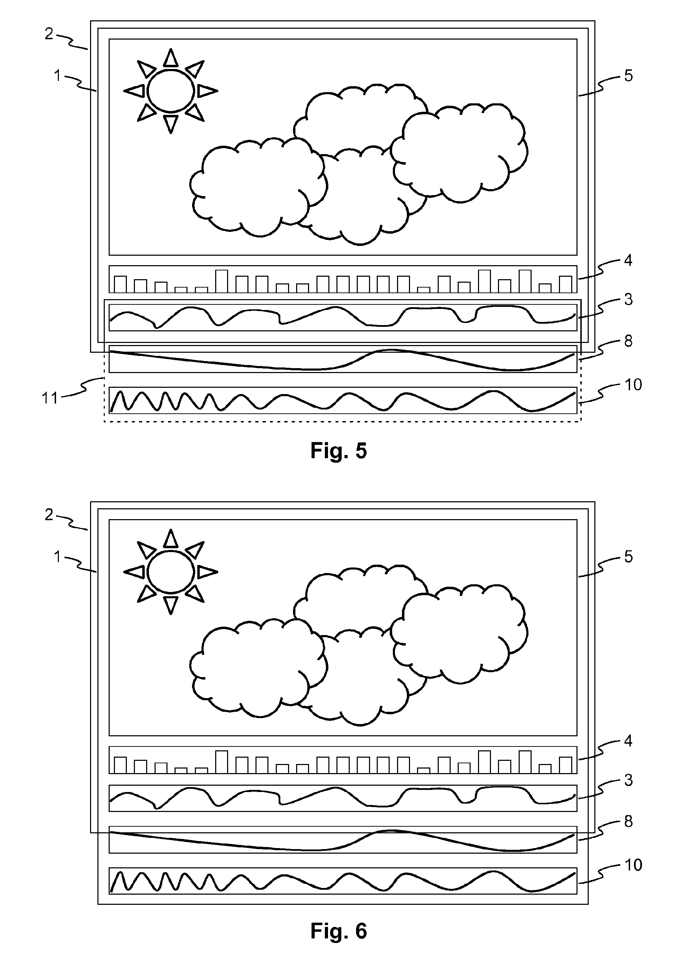

A second implementation of the proposed approach is shown in Fig. 5. In this case three sets of metadata are under review. For this purpose three coarse views 3, 8, 10 are provided in the graphic user interface 1. However, only one of the coarse views 3 is visible on the display 2. The three coarse views 3, 8, 10 are arranged in a dedicated scrolling area 11. The user may scroll through the three coarse views 3, 8, 10 without changing the rest of the graphic user interface, i.e. the fine view 4 and the frame window 5 keep their position on the display 2. Once the user selects a specific coarse view 3, 8, 10, the fine view 4 is updated accordingly. As before, selecting is preferably done by clicking on the desired coarse view 3, 8, 10. Alternatively, selecting is done by automatically switching the fine view 4 to the set of metadata whose coarse view 3, 8, 10 is currently visible on the display 2. As in Fig. 5 only limited space is available for displaying the coarse view 3, 8, 10, only one coarse view 3, 8, 10 is visible at a time.

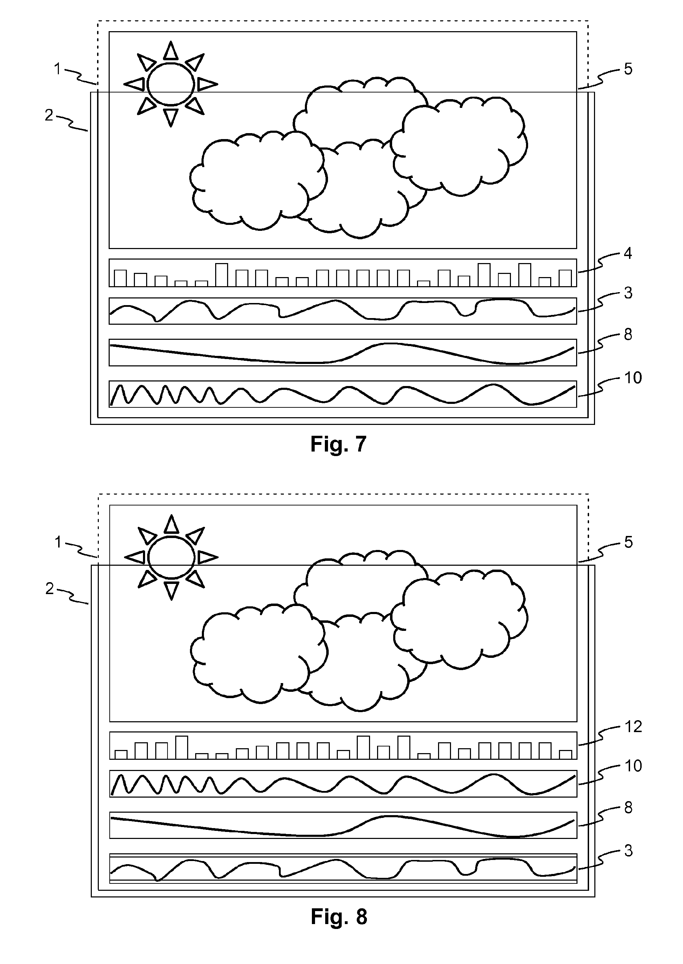

Yet another implementation shall now be explained with reference to Figs. 6 to 9. As can be seen from Fig. 6, three sets of metadata are under review, i.e. three coarse views 3, 8, 10 are provided below the single fine view 4. As a result the graphic user interface 1 does not fit into the display area and two coarse views 8, 10 are actually not displayed on the display 2. In this implementation the fine view 4 always corresponds to the top element of the coarse view stack. In order to review other metadata sets, the screen window is scrolled down, e.g. by pressing a key, using a scroll wheel movement of a mouse, dragging a scrollbar slider, using a finger swipe, etc., by a certain number of coarse views or until the last coarse view plot 10 is reached. The scrolling step size might be either done by a single pixel or by coarse view height. The scrolling is shown in Fig. 7, where the graphic user interface 1 has been scrolled down to the last coarse view 10. As a result, a part of the frame window 5 is no longer visible.

Once the user selects a set of metadata visible on the display 2, e.g. by mouse click, finger touch, etc., the corresponding coarse view 3, 8, 10 is moved to the top of the coarse view stack, changing places with the current top coarse view. This results in an update of the fine view 12, which now corresponds to the set of metadata of the new top coarse view. This swapping is shown in Fig. 8. The user has selected the third set of metadata by clicking on the third coarse view 10. This third coarse view 10 is moved to the top of the coarse view stack, whereas the coarse view 3 of the first set of metadata is moved to the previous position of third coarse view 10. The fine view 12 is updated with the corresponding values.

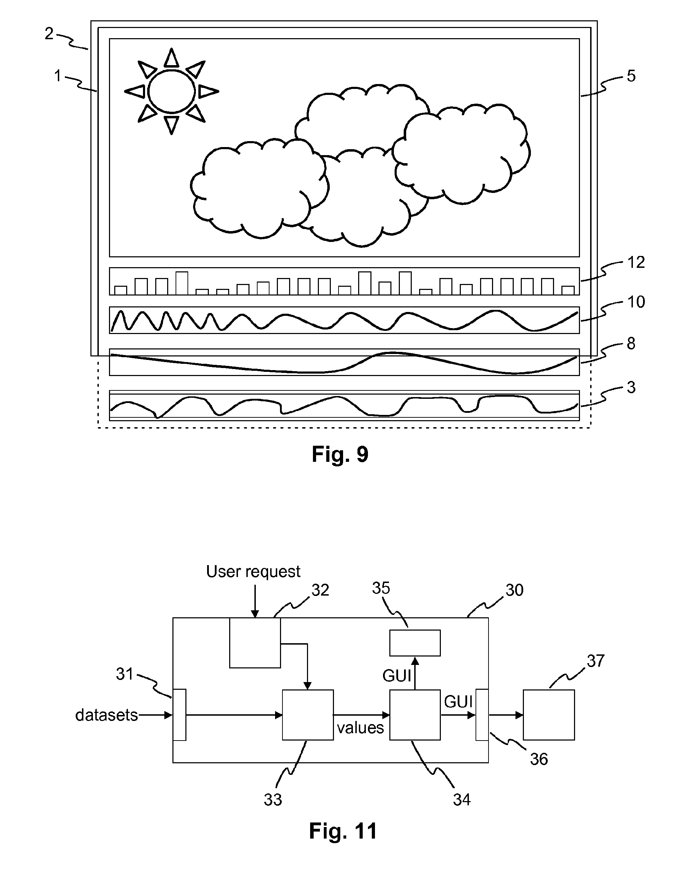

Since depending on the number of datasets the content view in the frame window 5 as well as the fine view 12 may not or only partly be visible, it will generally be necessary to scroll up again. This is depicted in Fig. 9. Of course, the scrolling may likewise be initiated automatically once the user has selected a set of metadata.

Unlike scrolling through a static document, the order of the coarse views 3, 8, 10 is dynamically changed and the fine view 4, 9, 12 is adjusted correspondingly. The proposed implementation hence goes beyond a normal document concept. Also, as the upper part of the graphic user interface 1 with the content view in the frame window 5, a single coarse view 3, 8, 10 and the corresponding fine view 4, 9, 12 visible, serves the special purpose of in depth review and hides all other information. Due to its importance it can easily be reached just by scrolling up to the top.

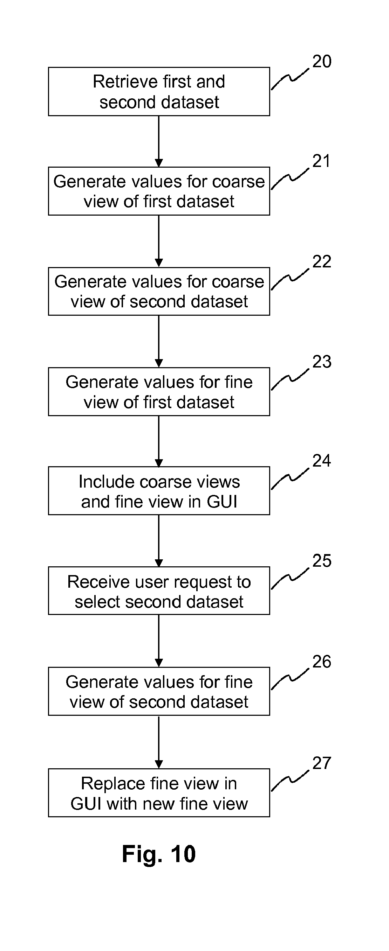

A method for interactive review of two or more datasets is schematically illustrated in Fig. 10. In a first step at least a first dataset and a second dataset are retrieved 20. Once the datasets are available representative values are generated 21 from the first dataset for a coarse view 3 of the first dataset. Likewise, representative values are generated 22 from the second dataset for a coarse view 8 of the second dataset. In order to enable a detailed review of the datasets, also representative values for a fine view 4 of the first dataset are generated 23 from the first dataset. The coarse view 3 of the first dataset, the coarse view 8 of the second dataset, and the fine view 4 of the first dataset are then included 24 in a graphic user interface 1. Responsive to receiving 25 a user request to select the second dataset, representative values - are generated 26 from the second dataset for a fine view 9 of the second dataset. This fine view 9 of the second dataset replaces 27 the fine view 4 of the first dataset in the graphic user interface 1.

An apparatus 30 configured to implement the method of Fig. 10 is schematically shown in Fig. 11. The apparatus 30 has an input 21 for retrieving 20 at least a first dataset and a second dataset are retrieved, e.g. from a local storage or a network source. A processor 33 generates 21, 23 representative values from the first dataset for a coarse view 3 of the first dataset and for a fine view 4 of the first dataset. The processor 33 also generates 22 representative values from the second dataset for a coarse view 8 of the second dataset. These values are provided to a user interface generator 34, which includes 24 the coarse view 3 of the first dataset, the coarse view 8 of the second dataset, and the fine view 4 of the first dataset in a graphic user interface 1. The graphic user interface 1 is either output to a display 35 forming part of the apparatus 30 or to an external display 37 via a dedicated output 36. In either case, advantageously the display 35, 37 serves as a touch user interface for the apparatus 30. Upon reception 25 of a user request via a user input 32 to select the second dataset, the processor 33 generates 26 representative values from the second dataset for a fine view 9 of the second dataset. The user interface generator 34 then replaces 27 the fine view 4 of the first dataset in the graphic user interface 1 with the fine view 9 of the second dataset. Of course, the various units of the apparatus 30 may likewise be combined or partially combined into a single unit or implemented as software running on a processor.

Although the invention has been described hereinabove with reference to a specific embodiment, it is not limited to this embodiment and no doubt further alternatives will occur to the skilled person that lie within the scope of the invention as claimed.

## Claims

1. A method for interactive review of two or more datasets, the method **comprising** the steps of:
- retrieving (20) at least a first dataset and a second dataset;
- generating (21) representative values from the first dataset for a coarse view (3) of the first dataset;
- generating (22) representative values from the second dataset for a coarse view (8) of the second dataset;
- generating (23) representative values from the first dataset for a fine view (4) of the first dataset;
- including (24) the coarse view (3) of the first dataset, the coarse view (8) of the second dataset, and the fine view (4) of the first dataset in a graphic user interface (1); and
- responsive to receiving (25) a user request to select the second dataset:
- generating (26) representative values from the second dataset for a fine view (9) of the second dataset; and
- replacing (27) the fine view (4) of the first dataset in the graphic user interface (1) with the fine view (9) of the second dataset.

2. The method according to claim 1, **wherein** the representative values for the coarse view (3, 8) of a dataset are generated (21, 22) by clustering data elements of the dataset in accordance with a number of displayable values in the coarse view (3, 8) and determining a value to be displayed for each cluster.

3. The method according to claim 1 or 2, **wherein** the representative values for the fine view (4, 9) of a dataset are generated (23, 26) by selecting a subset of the dataset, the subset of the dataset corresponding to a specified region (6) of the coarse view (3, 8) of the dataset.

4. The method according to one of claims 1 to 3, **wherein** the graphic user interface (1) is structured such that at least the coarse view (3) of the first dataset, the coarse view (8) of the second dataset, and the fine view (4, 9) of the first dataset or the second dataset is visible on a display (2).

5. The method according to one of claims 1 to 3, **wherein** the graphic user interface (1) comprises a scrolling area (11) and an area that is fixed on a display (2), and wherein the graphic user interface (1) is structured such that the fine view (4, 9) of the first dataset or the second dataset is visible in the area that is fixed on the display (2) and that the coarse view (3) of the first dataset and the coarse view (8) of the second dataset are arranged in the scrolling area (11).

6. The method according to one of claims 1 to 3, **wherein** the graphic user interface (1) is structured such that the coarse view (3) of the first dataset and the coarse view (8) of the second dataset are arranged as a stack of coarse views (3, 8) below the fine view (4, 9) of the first dataset or the second dataset, and wherein in order to display a coarse view (3, 8) on a display (2) for selection the graphic user interface (1) is scrolled down.

7. The method according to claim 6, **wherein** upon selection of a dataset the coarse view (3, 8) of the select dataset is placed at the top stack of coarse views (3, 8).

8. The method according to claim 6 or 7, **wherein** upon selection of a dataset the graphic user interface (1) is automatically scrolled back to the top.

9. The method according to one of claims 1 to 8, **wherein** a dataset is selected by a mouse click or finger touch on the coarse view (3, 8) of the dataset or by determining which coarse view (3, 8) is the only coarse view (3, 8) visible on a display (2).

10. An apparatus (30) configured to enable interactive review of two or more datasets, the apparatus **comprising:**
- an input (31) configured to retrieve (20) at least a first dataset and a second dataset;
- a user input (32) configured to receive (25) a user request to select the second dataset;
- a processor (33) configured to generate (21, 23) representative values from the first dataset for a coarse view (3) of the first dataset and for a fine view (4) of the first dataset, and to generate (22, 26) representative values from the second dataset for a coarse view (8) of the second dataset and for a fine view (9) of the second dataset; and
- a user interface generator (34) configured to include (24) the coarse view (3) of the first dataset, the coarse view (8) of the second dataset, and the fine view (4) of the first dataset in a graphic user interface (1), wherein the user interface generator (34) is further configured to replace (27) the fine view (4) of the first dataset in the graphic user interface (1) with the fine view (9) of the second dataset responsive to receiving (25) a user request to select the second dataset.

11. A computer readable storage medium having stored therein instructions enabling interactive review of two or more datasets, which when executed by a computer, cause the computer to:
- retrieve (20) at least a first dataset and a second dataset;
- generate (21) representative values from the first dataset for a coarse view (3) of the first dataset;
- generate (22) representative values from the second dataset for a coarse view (8) of the second dataset;
- generate (23) representative values from the first dataset for a fine view (4) of the first dataset;
- include (24) the coarse view (3) of the first dataset, the coarse view (8) of the second dataset, and the fine view (4) of the first dataset in a graphic user interface (1); and
- responsive to receiving (25) a user request to select the second dataset:
- generate (26) representative values from the second dataset for a fine view (9) of the second dataset; and
- replace (27) the fine view (4) of the first dataset in the graphic user interface (1) with the fine view (9) of the second dataset.
